# EUROPEAN PATENT SPECIFICATION

(11) **EP 1 092 631 B1**
(45) Date of publication and mention of the grant of the patent: **10.08.2005**
(21) Application number: 99830647.6
(22) Date of filing: 13.10.1999
(51) Int. Cl.: B65B 51/30

(54) **Packaging unit for continuously producing sealed packages for pourable food products**
Verpackungseinheit zum kontinuierlichen Herstellen von Verpackungen für flüssige Nahrungsmittel
Unité d'emballage pour la production en continu d'emballages pour produits alimentaires fluides

(43) Date of publication of application: 18.04.2001
(73) Proprietor: Tetra Laval Holdings & Finance S.A., 1009 Pully (CH)
(72) Inventor: Pradelli, Massimo, 42100 Reggio Emilia (IT); Friberg, Lennart, 27033 Vollsjö (SE); Di Dodo, Ernesto, Knaresborough HG5 8EG (GB); Fontanazzi, Paolo, 41100 Modena (IT); Hansson, Lennart, 22474 Lund (SE)
(74) Representative: Franzolin, Luigi

(56) References cited:
- DE-A- 1 511 540
- NL-C- 102 740
- US-A- 3 300 944

## Description

The present invention relates to a packaging unit for continuously producing sealed packages of pourable food products from a tube of packaging material.

Many pourable food products, such as fruit juice, pasteurized or UHT (ultra-high-temperature processed) milk, wine, tomato sauce, etc., are sold in packages made of sterilized packaging material.

A typical example of such a package is the parallelepipedal package for liquid or pourable food products known as Tetra Brik Aseptic (registered trademark), which is formed by folding and sealing laminated strip packaging material. The laminated packaging material comprises layers of fibrous material, e.g. paper, covered on both sides with thermoplastic material, e.g. polyethylene. In the case of aseptic packages, the side of the packaging material eventually contacting the food product in the package also has a layer of barrier material, such as an aluminium sheet, which in turn is covered with a layer of thermoplastic material.

As is known, such packages are produced on fully automatic packaging units, on which a continuous tube is formed from the strip-fed packaging material; the strip of packaging material is sterilized on the packaging unit, e.g. by applying a chemical sterilizing agent, such as a hydrogen peroxide solution; following sterilization, the sterilizing agent is removed, e.g. vaporized by heating, from the surfaces of the packaging material; and the strip of packaging material so sterilized is kept in a closed sterile environment, and is folded and sealed longitudinally to form a tube.

The tube is then filled with the sterilized or sterile-processed food product, and is sealed by pairs of jaws and then cut at equally spaced transverse bands to form pillow packs, which are subsequently folded mechanically to form the finished, e.g. parallelepipedal, packages.

Packaging units of the above type are known - e.g. as described in EP-A-O 887 273 - which comprise a pair of forming chains defining respective endless paths and in turn defined by a number of articulated jaws and counterjaws respectively; the two paths have respective substantially straight branches facing and parallel to each other, and between which the tube of packaging material is fed so that the jaws cooperate with the corresponding counterjaws along said branches of the respective paths to grip the tube at a number of successive transverse bands at which the tube is heat sealed transversely. The pillow packs so formed are separated at a cutting station located downstream from the forming chains and comprising a pair of counter-rotating rollers, one of which comprises a number of cutters.

The above solution provides for producing good-quality, reliable packages at an extremely high output rate.

Nevertheless, a need is felt, especially in the case of large-size packages, e.g. of a liter or more, to improve cutting precision, which may be impaired by incorrect positioning of the sealing bands with respect to the rotary cutters, on account of the weight of the packages themselves suspended between the forming chains and the cutting station.

In theory, the above problem can be solved by incorporating the cutters in the jaws, as described, for example, in CD-A-592 747 and US-A-3 300 944, which provide for directly activating the cutters - fitted in sliding manner inside the jaws and having respective cam follower rollers - by means of cams fixed to the machine structure. In so doing, however, the cam followers, on impact with the fixed cams, are subjected to forces with a transverse component, thus resulting in abnormal stress on, and rapid wear of, the cutters.

DE-A-1 511 540 discloses a chain-type packaging unit having jaw cutters controlled by actuators carried by the respective jaws via levers, but does not disclose a cam cutter control mechanism.

It is an object of the present invention to provide a chain-type packaging unit designed to eliminate drawbacks typically associated with known units, and which in particular has cam-controlled cutters that are not subjected to forces with a transverse component.

This object is attained by a packaging unit as claimed in claim 1.

A preferred, non-limiting embodiment of the present invention will be described by way of example with reference to the accompanying drawings, in which:
Figure 1 shows a schematic side view of a packaging unit in accordance with the present invention;
Figure 2 shows a view in perspective of a jaw and corresponding counterjaw of the Figure 1 unit;
Figure 3 shows an underside half-section of the Figure 2 counterjaw;
Figures 4 and 5 show sections along line IV-IV in Figure 3, in two different operating conditions.

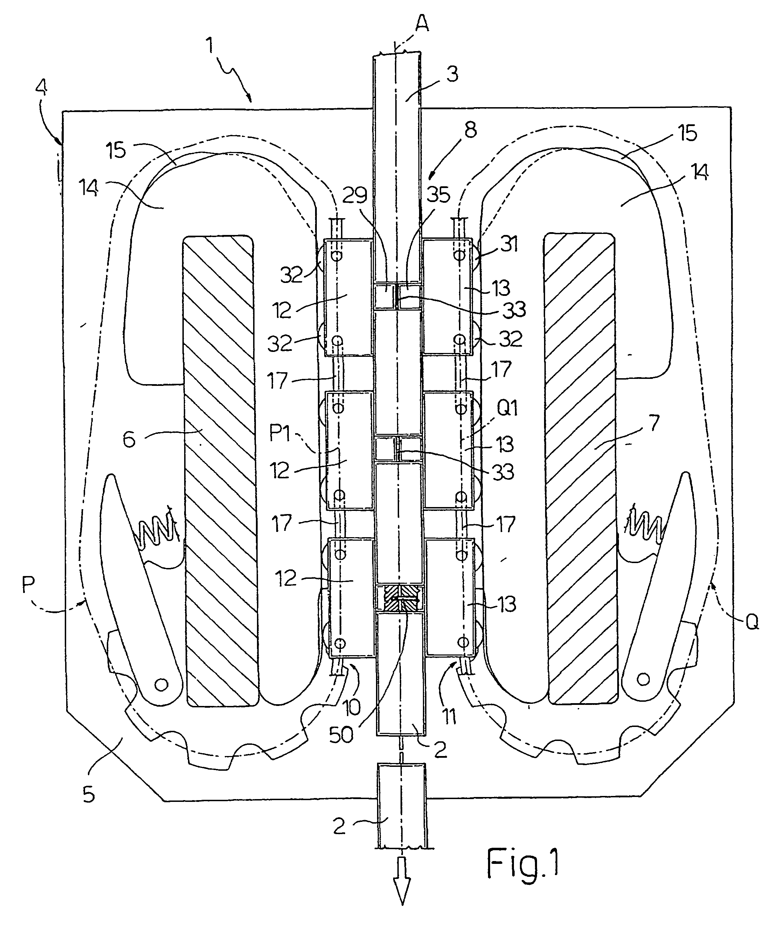

Number 1 in Figure 1 indicates as a whole a packaging unit for continuously producing sealed packages 2 of a pourable food product, such as pasteurized or UHT milk, fruit juice, wine, etc., from a tube 3 of packaging material.

Tube 3 is formed in known manner upstream from unit 1 by longitudinally folding and sealing a strip of heat-seal sheet material, and is filled upstream with the sterilized or sterile-processed food product for packaging.

Unit 1 comprises a frame 4 defined by two sides 5 (only one shown) and by two parallel transverse walls 6, 7 fixed rigidly between sides 5 to define, with sides 5, a compartment 8; and two forming chains 10, 11 supported by frame 4 and respectively comprising first jaws 12 - hereinafter simply referred to as "jaws 12" - and second jaws or counterjaws 13, which cooperate with one another to interact with the tube 3 of packaging material fed through compartment 8 along a vertical path A.

Chains 10, 11 define respective endless paths P, Q along which jaws 12 and counterjaws 13 are fed, and which extend respectively about walls 6 and 7 of frame 4 and comprise respective substantially straight work portions P1, Q1 parallel to each other, extending along feed path A of tube 3, and along which jaws 12 and counterjaws 13 interact to pressure grip the tube.

Jaws 12 and counterjaws 13 are an integral part, and define alternate links, of respective chains 10, 11, and are connected in articulated manner by pairs of rods 17.

The supporting, actuating and guide devices of chains 10, 11 are known, e.g. from EP-A-O 887 263, and therefore not described in detail. Suffice it to say that the movement of jaws 12 and counterjaws 13 is defined by cams 14, 15 fitted to walls 6, 7.

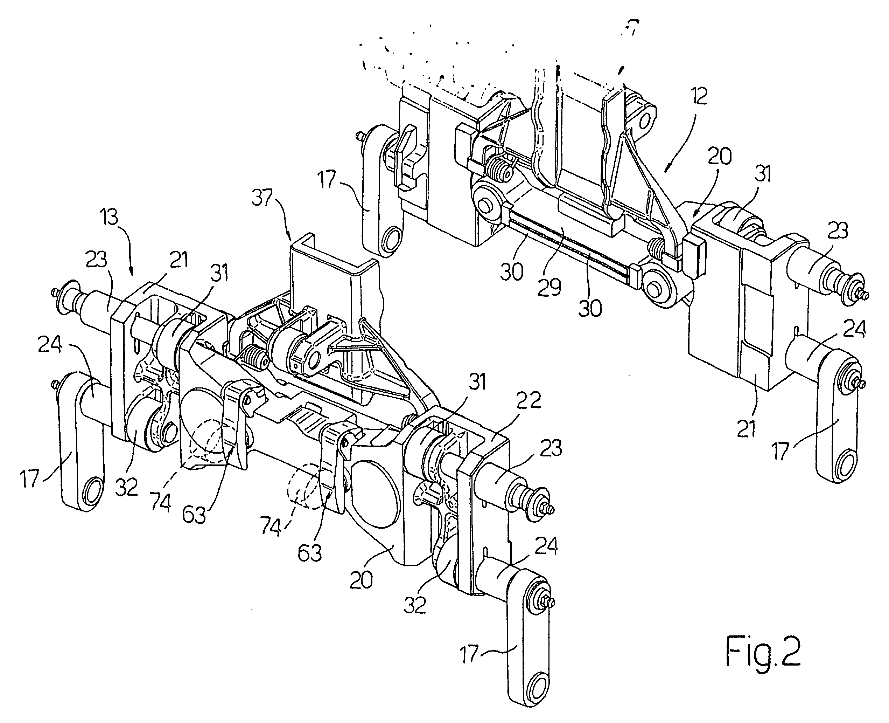

Each jaw 12 and counterjaw 13 (Figure 2) comprises a main body 20 elongated in a direction perpendicular to path A and parallel to walls 6, 7 of frame 4; each body 20 comprises respective end projections 21, 22, each having a first and second projecting pin 23, 24 with respective axes spaced apart and parallel to the main dimension of the body; rods 17 pivot on pins 23, 24 of jaws 12 and counterjaws 13 so as to connect pins 23 of one jaw/counterjaw to pins 24 of the adjacent jaw/counterjaw; and jaws 12 and counterjaws 13 also comprise respective pairs of guide rollers 31, 32 fitted inside projections 21, 22, coaxially with pins 23, 24, and which roll along cams 14, 15 (Figure 1).

Each jaw 12 (Figure 2) comprises an induction heating element 29 fitted to main body 20 crosswise to feed path A of tube 3, and which in turn comprises a pair of straight, parallel, front active surfaces 30.

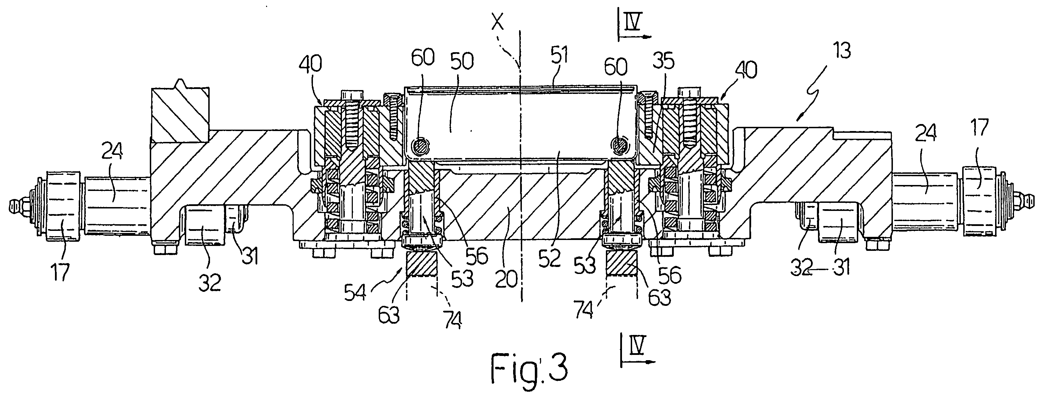

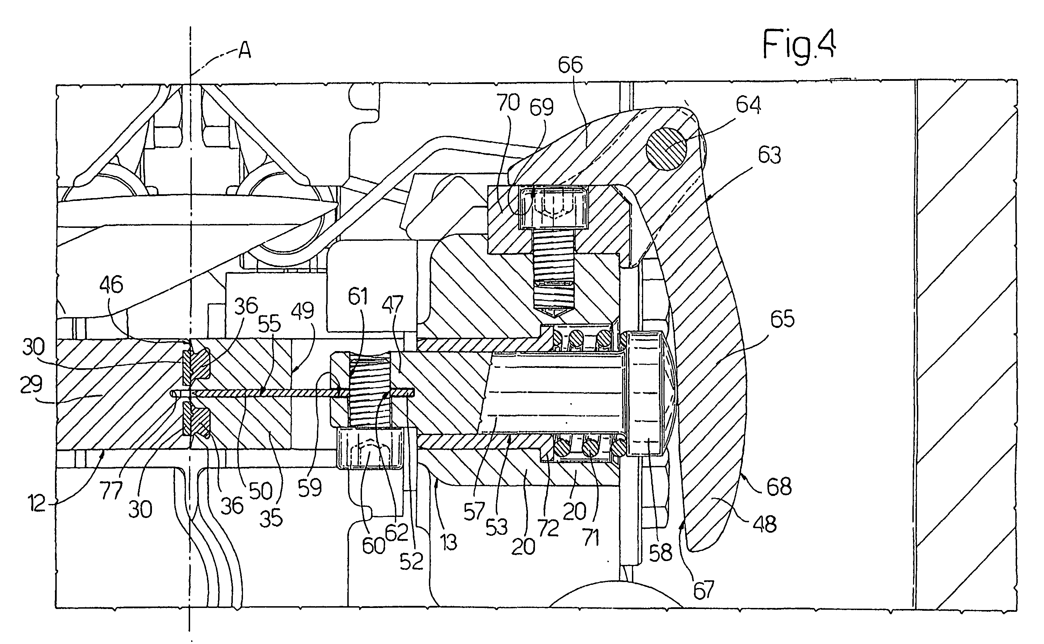

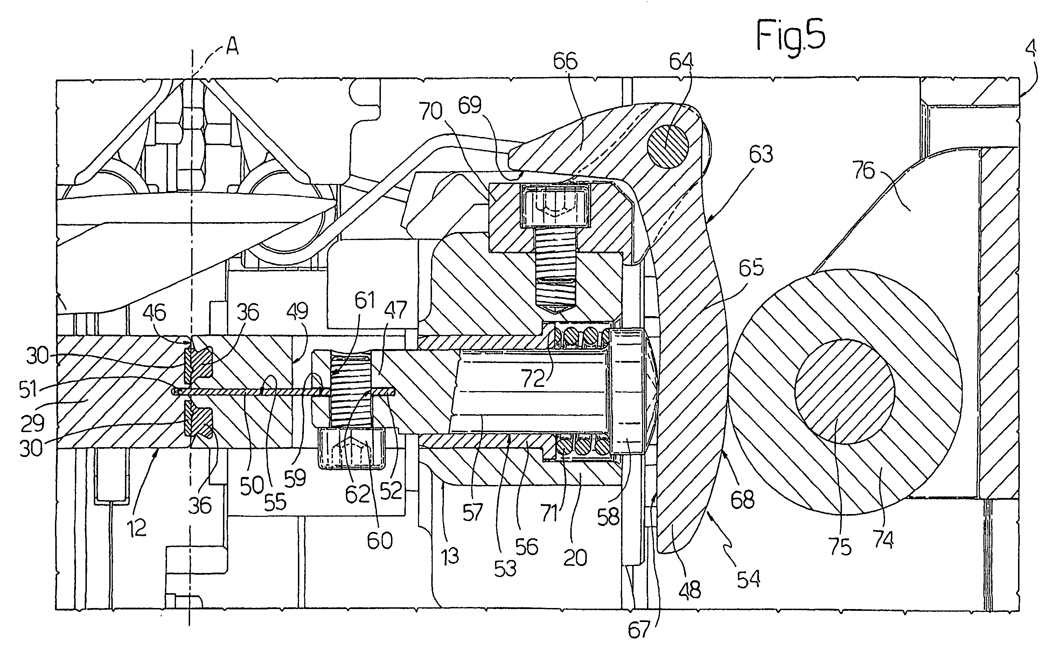

In lieu of heating element 29, each counterjaw 13 (Figures 4 and 5) comprises a pressure bar 35; and heating element 29 of each jaw 12 and bar 35 of the corresponding counterjaw 13 cooperate with each other to pressure grip tube 3 (Figure 2) at a transverse band 33 of the tube and heat seal the packaging material. On a front surface 46 facing the corresponding jaw 12 in use, bar 35 is fitted with a pair of pads 36 made of relatively flexible elastomeric material and which cooperate with the packaging material in opposition to active surfaces 30 of heating element 29. Pressure bar 35 of each counterjaw 13 is fitted to respective main body 20 by means of a pair of elastic end connecting devices 40 (Figure 3) - e.g. of the type described in EP-A-O 887 269 - which are permitted a limited amount of yield in a direction X perpendicular to the plane defined by the axes of pins 23, 24 and defining, in use, the direction in which pressure is applied by each jaw-counterjaw pair on tube 3, and the cutting direction of the packaging material.

Each counterjaw 13 comprises a cutter 50 for cutting tube 3 at a sealing band 33 and so detaching from the tube the formed package coming off forming chains 10, 11. In the following description, reference is made to one counterjaw 13, all the counterjaws 13 and respective cutters 50 obviously being identical.

With reference to Figures 3 to 5, cutter 50 is flat, rectangular and elongated parallel to the major dimension of counterjaw 13, and comprises a front blade 51 which comes out of counterjaw 13 during the cutting operation. More specifically, cutter 50 is housed in sliding manner inside a middle slot 55 in pressure bar 35, and is secured at the ends, close to an edge 52 opposite blade 51, to respective tappet members 53, which are fitted inside respective bushes 56 through main body 20 so as to slide parallel to direction X, and which form part of a cam control device 54 described in detail later on.

Each tappet member 53 comprises a cylindrical rod 57 having a convex control head 58 and a diametrical slot 59 formed in a free end 47 of rod 57 opposite head 58; free end 47 projects axially from main body 20 and is housed loosely inside a milled portion 49 of pressure bar 35; slot 59 is engaged by edge 52 of cutter 50; and cutter 50 is fixed rigidly to each tappet member by means of a screw 60, which is screwed inside a radial hole 61 formed in rod 57 and intersecting slot 59, and engages a respective through hole 62 in cutter 50.

Cam control device 54 comprises, for each counterjaw 13, a pair of rocker-arm transmission members 63 cooperating with respective tappet members 53. Each transmission member 63 is hinged to the main body of counterjaw 13 about a pin 64 having an axis parallel to the plane of cutter 50 and perpendicular to direction X, and is in the form of a square with a first arm 65 for controlling the respective tappet member, and a second arm 66 substantially perpendicular to first arm 65. First arm 65 comprises an end portion 48 extending on the opposite side of tappet member 53 to pin 64 so that an intermediate portion of arm 65 cooperates with head 58 of tappet member 53, and is defined by a flat surface 67 facing head 58, and by an opposite, convex cam control surface 68; and second arm 66 comprises a flat stop surface 69 facing a stop member 70 fitted to main body 20 of counterjaw 13, and which cooperates with stop member 70 to define a stop position of member 63 (Figure 4).

A spring 71, coaxial with rod 57, is compressed between head 58 of tappet member 53 and a shoulder 72 - fixed to main body 20 and conveniently defined by a flange of bush 56 - so as to exert axial pressure to keep tappet member 53 in contact with first arm 65 of member 63, and, in the absence of external intervention, to keep second arm 66 of member 63 in contact with stop member 70 in said stop position.

With transmission members 63 and tappet members 53 positioned as described above, cutter 50 is set to a withdrawn or rest position in which blade 51 is housed inside pressure bar 35 of counterjaw 13 (Figure 4); the elastic force of springs 71 is transmitted by members 63 onto the main body of counterjaw 13, so that no elastic stress is exerted on cutter 50; and, even in the rest position, screws 60 securing cutter 50 to tappet members 53 are accessible by being located outside main body 20 of counterjaw 13.

Cam control device 54 comprises a pair of control rollers 74, which are secured to frame 4 in fixed positions, at an end portion of work portion Q1 of path Q of counterjaws 13, so as to interact with respective transmission members 63 of the counterjaws. More specifically (Figure 5), rollers 74 are rotatable about respective horizontal-axis pins 75 fixed rigidly to frame 4 by supporting brackets 76, and interact with cam surfaces 68 of respective members 63.

Jaws 12 and counterjaws 13 comprise respective devices 37 for controlling the volume of packages 2 in the course of formation, and which are not described in detail by not forming part of the present invention.

Operation of unit 1 as regards forming and sealing the packages is known and therefore not described in detail.

Very briefly, each jaw 12 and counterjaw 13 interact cyclically with tube 3 of packaging material according to the movements imposed by cams 14, 15 : following initial impact and gradual compression of tube 3, during which the packaging material is folded locally to form a flat transverse sealing band 33, jaw 12 and counterjaw 13 reach portions P1, Q1 of respective paths P, Q, along which maximum gripping pressure is exerted on tube 3, and heating element 29 of jaw 12 is supplied to heat seal the packaging material and so seal the material along two sealing lines defined by active surfaces 30 of heating element 29 (Figure 4). In the course of the above steps, cutter 50 is kept by springs 70 in the withdrawn position shown in Figure 4.

At the same time, volume-control devices 37 interact with the lateral surface of the package being formed to impose a predetermined shape with the aid of preformed weakening lines on the material.

Before jaw 12 and respective counterjaw 13 withdraw from the packaging material, cam surfaces 68 of transmission members 63 reach respective control rollers 74; and contact between surfaces 68 and rollers 74 commences at end portions 48 of arms 65, i.e. with a lever arm greater than that of contact between surfaces 67 and tappet members 53, so as to multiply the force transmitted to tappet members 53.

On entering into rolling contact with rollers 74, members 63 perform an actuating and a return stroke - by rotating respectively clockwise and anticlockwise in Figures 4 and 5 - according to the movement defined by the contours of surfaces 68. Flat surfaces 67 of first arms 65 of transmission members 63 transmit a purely axial force to tappet members 53, which move cutter 50 into the forward position (Figure 5), in opposition to springs 71, so as to cut the packaging material along a cutting line crosswise to the material and halfway between the two sealing lines (Figure 5). On cutting through the material, blade 51 of cutter 50 is received inside a corresponding slot 77 in jaw 12.

Once the material is cut, cutter 50 is restored by springs 71 to the rest position; jaw 12 and respective counterjaw 13 are parted; and package 2, detached from the continuous tube of packaging material and as yet in the form of a pillow pack, may be guided to a follow-up processing station, e.g. a folding station, where it is formed into the finished configuration.

The advantages of unit 1 according to the present invention will be clear from the foregoing description.

In particular, employing transmission members 63 hinged to counterjaws 13 and interposed between control rollers 74 and tappet members 53 provides for transmitting to pins 75 of the rollers the actuating force components crosswise to cutting direction X, so that tappet members 53 are subjected to purely axial forces, and no transverse force is exerted on cutters 50.

Moreover, cutters 50 are so assembled as to enable fast, troublefree, absolutely safe replacement in the event of wear.

Screws 60, in fact, are easily accessible at all times and need simply be removed to extract cutter 50 from the front. Moreover, each cutter 50 is subjected to no elastic forces, which are transmitted to the main body of counterjaw 13 by transmission members 63, so that removal of screws 60 involves no danger to the operator.

Clearly, changes may be made to unit 1 as described herein without, however, departing from the scope of the present invention as defined by the claims.

In particular, the fixed control member may be defined by a cam as opposed to a roller; cam surface 68 of each transmission member 63 may be replaced by a cam follower roller carried by the first arm of the transmission member; and screws 60 securing cutters 50 may be replaced by any appropriate fastening member, e.g. a fast-fit fastening member.

Finally, cutters 50 may be carried by jaws 12 as opposed to counterjaws 13.

## Claims

1. A packaging unit (1) for continuously producing sealed packages (2) of a pourable food product from a tube (3) of heat-seal sheet packaging material fed along a vertical feed path (A) and filled with said food product; said unit comprising:
- a first forming chain (10) having a number of articulated first jaws (12) and defining an endless first path (P) along which said first jaws (12) are fed;
- a second forming chain (11) having a number of articulated second jaws (13) and defining an endless second path (Q) along which said second jaws (13) are fed;
said first and second path respectively comprising a first and a second work portion (P1, Q1) adjacent to said feed path (A) of the tube (3) of packaging material and extending substantially symmetrically on opposite sides of said feed path (A) so that said first jaws (12) and second jaws (13) pressure grip said tube (3) at respective equally spaced transverse bands (33);
said jaws (12) of at least one (10) of said forming chains (10, 11) having respective heating elements (29) for heat sealing the packaging material at said transverse bands (33) of the tube (3); and
- cutting means (50) for detaching the formed packages (2) from said tube (3) by means of a transverse cut along the respective said transverse bands; said cutting means comprising a number of cutters (50) housed in respective jaws (13) of one (11) of said forming chains (10, 11) so as to slide in a cutting direction (X) between a rest position housed inside the respective jaws (13), and a forward position projecting frontwards from the respective said jaws (13), and a cam control device (54) for controlling the movement of said cutters (50);
said cam control device (54) comprising a control member (74) carried in a fixed position by a supporting structure (4) of said unit (1), and, for each jaw (13), at least one tappet member (53) integral with the respective cutter (50) and interacting with said control member (74) to move the cutter (50) from said rest position to said forward position, and means (71) for restoring said cutter (50) to said rest position;
**characterized in that** said cam control device (54) comprises, for each jaw (13), at least one transmission member (63) connected to the jaw (13) by means of a hinge (64) and having a control surface (68) cooperating with said control member (74), and a thrust surface (67) facing the respective said tappet member (53) in said cutting direction (X),
said transmission member (63) comprising a first arm (65) having said control surface (68) and said thrust surface (67); said first arm (65) comprising an end portion (48) extending on the opposite side of said tappet member (53) to said hinge and defining at least part of said control surface (68);
said transmission member (63) being in the form of a rocker arm, and comprising a second arm (66) having a stop surface (69) cooperating with said jaw (13) to define a stop position of said tappet member (53) by virtue of said elastic means (71).

2. A unit as claimed in Claim 1, **characterized in that** said control surface (68) has a cam profile; and **in that** said control member is a roller (74) rotating about a fixed pin (75).

3. A unit as claimed in any one of the foregoing Claims, **characterized in that** said tappet member (53) comprises a rod (57) fitted through said jaw (13) so as to slide in said cutting direction (X), and having a convex head (58) cooperating with said thrust surface (67) of said transmission member (63); said means for restoring said cutter (50) comprising a spring (71) coaxial with said rod (57) and compressed between said head (58) and a shoulder (72) fixed to said jaw (13).

4. A unit as claimed in Claim 3, **characterized in that** said jaw (13) comprises a main body (20), and a pressure bar (35) connected to said main body (20) by elastic connecting means (40); said tappet member (53) being fitted in sliding manner through said main body (20); and said cutter (50) being housed in sliding manner inside a middle slot (55) in said pressure bar (35).

5. A unit as claimed in Claim 4, **characterized by** comprising fastening means (60) for fastening said cutter (50) to an end portion (47) of said rod (57) projecting axially from said main body (20) of said jaw (13).

6. A unit as claimed in Claim 5, **characterized in that** said rod (57) comprises a middle axial slot (59) in said end portion (47); said cutter (50) having an edge (52) housed in, and locked by said fastening means (60) inside, said middle axial slot (59) in said rod (57).

7. A unit as claimed in any one of Claims 2 to 6, **characterized in that** said cam control device (54) comprises a pair of control rollers (74); two tappet members (53), for each said jaw (13), fitted close to opposite ends of a respective said cutter (50); and two respective transmission members (63) cooperating with said tappet members (53).

## Patentansprüche

1. Verpackungseinheit (1) zum kontinuierlichen Herstellen von versiegelten Verpackungen (2) für flüssige Nahrungsmittel aus einem Schlauch (3) aus heißgesiegeltem bahnförmigen Verpackungsmaterial, der entlang eines vertikalen Pfads (A) zugeführt und mit dem Nahrungsmittel befüllt wird; wobei diese Einheit enthält:
- eine erste Formkette (10), die eine Anzahl erster Gelenkbacken (12) hat und einen ersten Endlospfad (P) definiert, entlang dem die ersten Backen (12) zugeführt werden;
- eine zweite Formkette (11), die eine Anzahl zweiter Gelenkbacken (13) hat und einen zweiten Endlospfad (Q) definiert, entlang dem die zweiten Backen (13) zugeführt werden;
wobei der erste und zweite Pfad entsprechend einen ersten und einen zweiten Arbeitsabschnitt (P1, Q1) enthalten, der an den Zuführpfad (A) des Schlauchs (3) aus Verpackungsmaterial angrenzt und sich im Wesentlichen symmetrisch auf gegenüberliegenden Seiten des Zuführpfads (A) erstreckt, so dass die ersten Backen (12) und die zweiten Backen (13) den Schlauch (3) an entsprechend gleich beabstandeten Querbändern (33) mit Druck ergreifen;
wobei die Backen (12) wenigstens einer (10) der Formketten (10, 11) entsprechende Heizelemente (29) zum Heißsiegeln des Verpackungsmaterials an den Querbändern (33) des Schlauchs (3) haben; und
- Schneidmittel (50), um die geformten Verpackungen (2) von dem Schlauch (3) durch einen querlaufenden Schnitt entlang den jeweiligen Querbändern abzutrennen, wobei die Schneidmittel eine Anzahl Abschneider (50) enthalten, die in den jeweiligen Backen (13) einer (11) der Formketten (10, 11) untergebracht sind, um in einer Schneidrichtung (X) zwischen einer Ruheposition innerhalb der entsprechenden Backen (13) und einer Vorwärtsposition, die von den jeweiligen Backen (13) stirnseitig absteht, zu gleiten; und eine Nockensteuervorrichtung (54), um die Bewegung der Abschneider (50) zu steuern;
wobei die Nockensteuervorrichtung (54) ein Steuerteil (74) enthält, das in einer festen Position durch eine Stützvorrichtung (4) der Einheit (1) getragen wird, und, für jede Backe (13), mindestens ein Mitnehmerteil (53) enthält, das einstückig mit dem jeweiligen Abschneider (50) ausgebildet ist und mit dem Steuerteil (74) zusammenwirkt, um den Abschneider (50) von der Ruheposition in die Vorwärtsposition zu bewegen, und Mittel (71), um den Abschneider (50) wieder in die Ruheposition zurückzuführen;
**dadurch gekennzeichnet, dass** die Nockensteuervorrichtung (54), für jede Backe (13), wenigstens ein Übertragungsteil (63) enthält, das mit der Backe (13) mittels eines Drehgelenks (64) verbunden ist und eine Steuerfläche (68) hat, die mit dem Steuerteil (74) zusammenwirkt, sowie eine Schubfläche (67), die dem jeweiligen Mitnehmerteil (53) in der Schneidrichtung (X) zugewandt ist,
wobei das Übertragungsteil (63) einen ersten Arm (65) enthält, der die Steuerfläche (68) und die Schubfläche (67) aufweist; wobei der erste Arm (65) einen Endabschnitt (48) enthält, der sich auf der gegenüberliegenden Seite des Mitnehmerteils (53) zu dem Drehgelenk hin erstreckt und zumindest einen Teil der Steuerfläche (68) definiert;
wobei das Übertragungsteil (63) die Form eines Kipphebels hat und einen zweiten Arm (66) enthält, der eine Anschlagfläche (69) hat, die mit der Backe (13) zusammenwirkt, um eine Halteposition des Mitnehmerteils (53) mithilfe der elastischen Mittel (71) zu definieren.

2. Einheit nach Anspruch 1, **dadurch gekennzeichnet, dass** die Steuerfläche (68) ein Nockenprofil hat; und dass das Steuerteil eine Walze (74) ist, die sich um einen feststehenden Stift (75) dreht.

3. Einheit nach einem der vorhergehenden Ansprüche, **dadurch gekennzeichnet, dass** das Mitnehmerteil (53) eine Stange (57) enthält, die durch die Backe (13) hindurch befestigt ist, um in die Schneidrichtung (X) zu gleiten, und einen konvexen Kopf (58) hat, der mit der Schubfläche (67) des Übertragungsteils (63) zusammenwirkt; wobei die Mittel zum Zurückführen des Abschneiders (50) eine Feder (71) enthalten, die koaxial zur Stange (57) und zwischen dem Kopf (58) und einer an der Backe (13) befestigten Schulter (72) zusammengedrückt ist.

4. Einheit nach Anspruch 3, **dadurch gekennzeichnet, dass** die Backe (13) einen Hauptkörper (20) enthält, sowie eine Druckstange (35), die mit dem Hauptkörper (20) durch elastische Verbindungsmittel (40) verbunden ist; wobei das Mitnehmerteil (53) durch den Hauptkörper (20) gleitend eingepasst ist; und wobei der Abschneider (50) gleitend innerhalb eines Mittelschlitzes (55) in der Druckstange (35) untergebracht ist.

5. Einheit nach Anspruch 4, **dadurch gekennzeichnet, dass** sie Befestigungsmittel (60) enthält, um den Abschneider (50) an einem Endabschnitt (47) der Stange (57), die axial von dem Hauptkörper (20) der Backe (13) vorsteht, zu befestigen.

6. Einheit nach Anspruch 5, **dadurch gekennzeichnet, dass** die Stange (57) einen mittleren axialen Schlitz (59) in dem Endabschnitt (47) hat; wobei der Abschneider (50) eine Kante (52) hat, die in dem mittleren axialen Schlitz (59) in der Stange (57) untergebracht und innen durch die Befestigungsmittel (60) arretiert ist.

7. Einheit nach einem der Ansprüche 2 bis 6, **dadurch gekennzeichnet, dass** die Nockensteuervorrichtung (54) einen Paar Steuerwalzen (74) enthält, zwei Mitnehmerteile (53), für jede Backe (13), die nahe den gegenüberliegenden Ende eines entsprechenden Abschneiders (50) befestigt sind, und zwei entsprechende Übertragungsteile (63), die mit den Mitnehmerteilen (53) zusammenwirken.

## Revendications

1. Unité de conditionnement (1) destinée à produire en continu des emballages scellés (2) d'un produit alimentaire fluide à partir d'un tube (3) en matériau de conditionnement en feuille scellé à chaud délivré suivant un trajet d'alimentation vertical (A) et rempli avec ledit produit alimentaire ; ladite unité comprenant:
une première chaîne de formation (10) comportant un certain nombre de premières mâchoires articulées (12) et définissant un premier trajet sans fin (P) le long duquel lesdites premières mâchoires (12) sont déplacées ;
une seconde chaîne de formation (11) comportant un certain nombre de secondes mâchoires articulées (13) et définissant un second trajet sans fin (Q) le long duquel lesdites secondes mâchoires (13) sont déplacées ;
lesdits premier et second trajets comprenant respectivement une première et une seconde parties opérationnelles (P1, Q1) adjacentes audit trajet d'alimentation (A) du tube (3) de matériau de conditionnement et s'étendant de manière sensiblement symétrique sur des côtés opposés dudit trajet d'alimentation (A) de telle sorte que lesdites premières mâchoires (12) et secondes mâchoires (13) saisissent en le pressant ledit tube (3) au niveau de bandes transversales régulièrement espacées respectives (33) ;
lesdites mâchoires (12) d'au moins l'une desdites chaînes de formation (10, 11) comportant des éléments chauffants respectifs (29) afin de sceller à chaud le matériau de conditionnement au niveau desdites bandes transversales (33) du tube (3) ; et
des moyens de coupe (50) destinés à séparer les emballages formés (2) dudit tube (3) au moyen d'une découpe transversale le long desdites bandes transversales respectives ; lesdits moyens de coupe comprenant un certain nombre d'éléments de coupe (50) contenus sur des mâchoires respectives (13) de l'une (11) desdites chaînes de formation (10, 11) de manière à coulisser dans une direction de coupe (X) entre une position de repos contenue à l'intérieur des mâchoires respectives (13) et une position avancé s'étendant vers l'avant à partir desdites mâchoires respectives (13), et un dispositif de commande à came (54) destiné à commander le déplacement desdits éléments de coupe (50) ;
ledit dispositif de commande à came (54) comprenant un élément de commande (74) supporté dans une position fixe par une structure support (4) de ladite unité (1), et, pour chaque mâchoire (13), au moins un élément formant poussoir (53) unitaire avec l'élément de coupe respectif (50) et coopérant avec ledit élément de commande (74) afin de déplacer l'élément de coupe (50) à partir de ladite position de repos vers ladite position avant, et un moyen (71) destiné à rappeler ledit élément de coupe (50) à ladite position de repos ;
**caractérisée en ce que** ledit dispositif de commande à came (54) comprend, pour chaque mâchoire (13), au moins un élément de transmission (63) relié à la mâchoire (13) au moyen d'une charnière (64) et présentant une surface de commande (68) coopérant avec ledit élément de commande (74), et une surface de poussée (67) orientée face audit élément formant poussoir respectif (53) dans ladite direction de coupe (X),
ledit élément de transmission (63) comprenant un premier bras (65) comportant ladite surface de commande (68) et ladite surface de poussée (67) ; ledit premier bras (65) comprenant une partie d'extrémité (48) s'étendant sur le côté opposé dudit élément formant poussoir (53) vers ladite charnière et définissant au moins une partie de ladite surface de commande (68) ;
ledit élément de transmission (63) étant sous la forme d'un bras articulé et comprenant un second bras (66) présentant une surface d'arrêt (69) coopérant avec ladite mâchoire (13) afin de définir une position d'arrêt dudit élément formant poussoir (53) sous l'effet dudit moyen élastique (71).

2. Unité selon la revendication 1, **caractérisée en ce que** ladite surface de commande (68) présente un profil en came ; et **en ce que** ledit élément de commande est un rouleau (74) tournant autour d'une broche fixe (75).

3. Unité selon l'une quelconque des revendications précédentes, **caractérisée en ce que** ledit élément formant poussoir (53) comprend une tige (57) couplée par l'intermédiaire de ladite mâchoire (13) afin de coulisser dans ladite direction de coupe (X), et présentant une tête convexe (58) coopérant avec ladite surface de poussée (67) dudit élément de transmission (63) ; ledit moyen destiné à rappeler ledit élément de coupe (50) comprend un ressort (71) coaxial avec ladite tige (57) et compressé entre ladite tête (58) et un épaulement (72) fixé sur ladite mâchoire (13).

4. Unité selon la revendication 3, **caractérisée en ce que** ladite mâchoire (13) comprend un corps principal (20) et une barre de pression (35) reliée audit corps principal (20) par un moyen de liaison élastique (40) ; ledit élément formant poussoir (53) étant assemblé de manière à pouvoir coulisser à travers ledit corps principal (20) ; et ledit élément de coupe (50) étant contenu d'une manière à pouvoir coulisser à l'intérieur d'une fente centrale (55) sur ladite barre de pression (35).

5. Unité selon la revendication 4, **caractérisée par le fait qu'**elle comprend un moyen de fixation (60) afin de fixer ledit élément de coupe (50) sur une partie d'extrémité (47) de ladite tige (57) s'étendant axialement à partir dudit corps principal (20) de ladite mâchoire (13).

6. Unité selon la revendication 5, **caractérisée en ce que** ladite tige (57) comprend une fente axiale centrale (59) sur ladite partie d'extrémité (47) ; ledit élément de coupe (50) présentant un bord (52) contenu dans ladite fente axiale centrale (59) sur ladite tige (57) et verrouillé par ledit moyen de fixation (60) à l'intérieur de cette dernière.

7. Unité selon l'une quelconque des revendications 2 à 6, **caractérisée en ce que** ledit dispositif de commande à came (57) comprend une paire de rouleaux de commande (74) ; deux éléments formant poussoir (53), pour chacune desdites mâchoires (13), assemblés à proximité d'extrémités opposées de l'un desdits éléments de coupe respectif (50) ; et deux éléments de transmission respectifs (63) coopérant avec lesdits éléments formant poussoir (53).
